Europäisches Patentamt

European Patent Office

Office européen des brevets

(11) Veröffentlichungsnummer: **0 498 343 A2**

# (12) EUROPÄISCHE PATENTANMELDUNG

(21) Anmeldenummer: **92101726.5**

(22) Anmeldetag: **03.02.92**

(51) Int. Cl.⁵: **H04L 9/32**

(30) Priorität: **07.02.91 DE 4103735**

(43) Veröffentlichungstag der Anmeldung:
**12.08.92 Patentblatt 92/33**

(84) Benannte Vertragsstaaten:
**CH DE GB LI NL**

(71) Anmelder: **SIEMENS AKTIENGESELLSCHAFT**
**Wittelsbacherplatz 2**
**W-8000 München 2(DE)**

(72) Erfinder: **Hafner, Karlheinz, Dr. rer. nat.**
**Schiessstättstrasse 16**

**W-8000 München 2(DE)**
Erfinder: **Ritter, Hartmut, Dipl.-Phys.**
**Sudetenweg 22**
**W-8152 Feldkirchen-Westerham(DE)**
Erfinder: **Schwair, Thomas, Dipl.-Ing.**
**Ostpreussenstrasse 10**
**W-8012 Ottobrunn(DE)**
Erfinder: **Wallstab, Stefan, Dipl.-Ing.**
**Gustav-Heinemann-Ring 55**
**W-8000 München 83(DE)**
Erfinder: **Fumy, Walter, Dr.-Ing.**
**Kirschenstrasse 10**
**W-8524 Kleinsendelbach(DE)**

(54) **Verfahren zur Verhinderung der Nutzung von unerlaubt veränderten Daten und Schaltungsanordnung zur Durchführung des Verfahrens.**

(57) Die Nutzung von Daten (ND) bei einem Empfänger (EM) dieser Daten soll verhindert werden, wenn diese Daten unerlaubt geändert worden sind. Dazu versieht der Absender (AB) der Daten die Daten mit einem Siegel und übergibt dem Empfänger die Datensätze, die aus den Daten und dem Siegel bestehen. Vor Nutzung der Datensätze müssen diese daraufhin überprüft werden, ob das Siegel und die Daten zueinander passen. Dazu wird eine Schaltungsanordnung zur Authentifikation verwendet, die beim Empfänger angeordnet ist, die von den Datensätzen durchlaufen werden muß und die vor äußeren Angriffen gesichert ist. Die Schaltungsanordnung überprüft das Siegel auf Korrektheit, dabei kann sie z.B. eine Istsignatur des übertragenen Datencatzes bilden, die mit einer vorgegebenen Sollsignatur verglichen wird. Um die Sicherheit gegenüber äußeren Zugriff zu erhöhen, kann die Breite der Worte im Datensatz mit Hilfe eines Expanderschaltkreises erhöht werden und damit die Breite des zur Erzeugung der Istsignatur verwendeten Schieberegisters ebenfalls erhöht werden. Weiterhin ist es möglich, aus vorgegebener Sollsignatur und Istsignatur der Datenworte den Versiegelungsalgorithmus für die Versiegelung beim Absender zu ermitteln, wobei die Expander-Schaltkreistransformation berücksichtigt wird.

FIG 1

FIG 2

EP 0 498 343 A2

Zum ordnungsgemäßen Betrieb vieler Rechnersysteme sind neben der Hardware auch systemnahe Daten erforderlich, z.B. die sog. Firmware. Verfälschungen dieser Daten bei ihrer Übertragung bzw. die nachträgliche unerlaubte Veränderung beim Empfänger der Daten, also dem Anwender, können oft zu unerwünschten Folgen führen.

Eine entsprechende Lage ergibt sich auch bei Krypto-Hardware, die die Integrität oder Vertraulichkeit von Daten sicherstellen soll. Die Kryptohardware kann z.B. einen Prozessor enthalten, zu dessen Betrieb Firmware verwendet werden muß. Wenn diese Firmware nicht vollständig vom Anwender abgeschirmt werden kann, weil sie z.B. wegen ihres Umfangs in eigenen Speicherbausteinen untergebracht werden muß, oder weil sie aus Gründen der Flexibilität sogar von Datenträgern ladbar sein muß, dann besteht die Gefahr, daß der Schutzmantel durchbrochen werden kann und dadurch Zugriff zu in der Krypto-Hardware gespeicherten Daten möglich ist, z.B. das Auslesen dort gespeicherter Schlüssel möglich ist.

Klassische Verfahren zur Authenifizierung von Daten benutzen meist sog. Hash-Funktionen zur Komprimierung der Daten und anschließend allgemein bekannte kryptographische Algorithmen zum Schutz des Komprimats. Ziel dieser Verfahren ist es, die Kontrolle der Integrität der Daten durch den Empfänger zu ermöglichen; vor der Verwendung manipulierter Daten beim Anwender können sie dagegen nicht schützen.

Das der Erfindung zugrundeliegende Problem besteht darin, die Manipulation von Daten durch den Empfänger der Daten, d.h. die Nutzung von unerlaubt veränderten Daten durch den Empfänger zu verhindern. Die Manipulation oder Veränderung der Daten kann sowohl beim Transport der Daten zum Empfänger erfolgen als auch vom Empfänger selbst. Dieses Problem wird gemäß den Merkmalen des Anspruchs 1 gelöst.

Weiterhin besteht das Problem, zur Feststellung von unerlaubt veränderten Daten eine Schaltungsanordnung zur Authentifikation anzugeben. Dieses Problem wird gemäß den Merkmalen von Anspruch 5 gelöst.

Um die Manipulation der Daten durch den Empfänger zu verhindern, wird bei ihm ein sog. sicherer Bereich installiert, der vollständig vom Absender der Daten kontrolliert wird. In diesem sicheren Bereich kann der empfangene Datensatz auf seine Unversehrtheit überprüft werden. Der sichere Bereich soll aus Aufwandsgründen möglichst klein und aus Sicherheitsgründen möglichst gut geschützt sein. Dies kann durch hardwaregestützte Maßnahmen erreicht werden, z.B. dadurch, daß alle kritischen Teile auf einem einzigen Halbleiterbaustein integriert werden.

Die Überprüfung der übertragenen Datensätze erfolgt über ein Siegel. Die Daten, im folgenden Nutzdaten genannt, die z.B. wortweise organisiert sind, werden mit einem Siegel versehen. Dieses Siegel kann z.B. aus den Nutz-Datenworten entwickelt sein. Die Datenworte zusammen mit dem Siegel werden zu dem Empfänger übertragen. Bevor dort die Datenworte genutzt werden können, müssen sie durch die Siegelprüfung hindurchgehen. In der Siegelprüfung werden die Datensätze daraufhin überprüft, ob sie unerlaubt verändert worden sind. Dies ist dann der Fall, wenn eine Schaltungsanordnung zur Siegelprüfung, im folgenden Authentifikator genannt, feststellt, daß das Siegel im Datensatz aus der Datenworten nicht herleitbar ist. In diesem Fall kann ein Freigabesignal erzeugt werden, das dem Empfänger der Datenworte deren Nutzung sperrt.

Der Authentifikator kann aus einem Expanderschaltkreis bestehen, der Jeden zu prüfenden Datensatz wortweise empfängt und der die Breite der Worte im Datensatz durch eine Transformation erhöht. Der transformierte Datensatz kann dann in einem rückgekoppelten Schieberegister zu einer Istsignatur komprimiert werden, die mit einer Sollsignatur verglichen wird. Bei Ungleichheit kann ein Freigabesignal erzeugt werden. Der Expanderschaltkreis hat den Vorteil, daß die Entdeckung des Versiegelungsalgorithmus erheblich erschwert wird. Dies kann weiterhin dadurch noch verstärkt werden, daß der Expander mit den Datensätzen eine nichtlineare Transformation ausführt.

Die Erhöhung der Breite der Worte durch den Expanderschaltkreis kann z.B. dadurch erfolgen, daß die Datenbits durch Aufdoppeln erhöht werden oder daß die Datenbits eines Wortes durch eine Konstante aufgefüllt werden.

Die Signatur kann zweckmäßigerweise mit Hilfe eines linear rückgekoppelten Schieberegisters (LFSR) realisiert werden, das so aufgebaut sein kann, daß es parametrisierbar ist.

Der sichere Bereich beim Empfänger kann z.B. dadurch realisiert werden, daß der Expanderschaltkreis, das LFSR und die Vergleichsschaltung auf einem Chip integriert sind.

Eine weitere Möglichkeit, ein Siegel zur Versiegelung der Nutzdatenworte zu überprüfen, besteht darin, aus den zu einem Datensatz gehörenden Nutzdatenworten das Siegel zu berechnen und dieses mit dem beigefügten Siegel zu vergleichen.

Soll das Verfahren und die Anordnung zur Prüfung eines Mikroprogrammes bei einem Mikroprozessor verwendet werden, dann kann die Signatur der Mikrobefehle plus dem Siegel gebildet werden und diese Istsignatur mit einer vorgegebenen Sollsignatur verglichen werden. Die Errechnung des Siegels kann dann so erfolgen, daß der Unterschied zwischen der Sollsignatur und einer Zwischensignatur ermittelt wird, die aus den Mikrobefehlsworten gebildet worden ist. Andere Weiterbildungen ergeben sich aus den Unteransprüchen.

Anhand von Ausführungsbeispielen, die in den Figuren dargestellt sind, wird die Erfindung weiter erläutert. Es zeigen

Figur 1     ein Blockbild zur Versiegelung von Nutz-Datenworten beim Absender der Datenworte,

Figur 2     das Prinzip der Authentifikation zur Freigabe der Nutz-Datenworte beim Empfänger,

Figur 3     den Aufbau eines Authentifikators,

Figur 4     den Aufbau des linear rückgekoppelten Schieberegisters, das im Authentifikator verwendet wird,

Figur 5     einen Aufbau des Expanderschaltkreises,

Figur 6     ein Prinzipbild einer linearen Transformation im Expanderschaltkreis,

Figur 7     ein Prinzipbild der Architektur einer Mikroprogrammsteuerung.

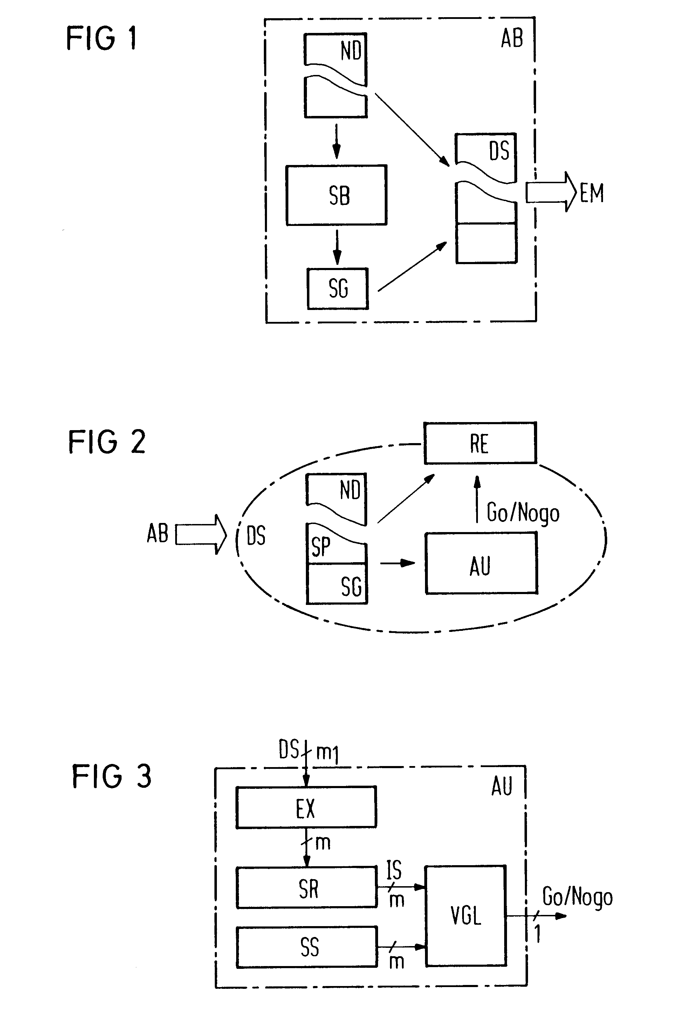

Anhand von Figur 1 und Figur 2 wird das Verfahren zur Verhinderung der Nutzung von unerlaubt veränderten Daten erläutert. Dabei wird im Ausführungsbeispiel davon ausgegangen, daß die Nutzdaten aus Datenworten bestehen. Ein Datensatz soll aus den Nutz-Datenworten und dem zugehörigen Siegel gebildet sein. Dabei kann das Siegel ebenfalls aus mehreren Datenworten bestehen.

Nach der Figur 1 werden die Nutzdatenworte ND dazu verwendet, um ein Siegel SG zu berechnen. Dies erfolgt mit Hilfe eines Versiegelungsalgorithmus SB. Die Nutzdatenworte ND und das Siegel SG bilden dann den Datensatz DS. Dieser Datensatz wird anschließend dem Empfänger EM übergeben.

Der Algorithmus zur Bestimmung des Siegels SG aus den Nutzdatenworten wird vom Absender AB geheimgehalten, sodaß nur er selbst in der Lage ist, die Nutzdatenworte richtig zu versiegeln. Das Siegel kann z.B. aus mehreren Siegelworten bestehen und kann den Nutzdatenworten im Datensatz angehängt werden oder kann zwischen die Nutzdatenworte verstreut abgelegt sein.

Der Empfänger EM kann die Datensätze erst dann nutzen, wenn die Nutzdatenworte und das Siegel zueinander passen. Dazu ist eine Siegelprüfung erforderlich, die in einem sog. Authentifikator AU ausgeführt wird. Der Authentifikator AU ist dort angeordnet, wo beim Empfänger EM die Nutzdatenworte verwertet werden. Soll dies z.B. in einem Rechner erfolgen, dann kann der Authentifikator AU im Rechner angeordnet sein und dort fest integriert sein. Im Authentifikator wird der Datensatz einem Algorithmus zur Siegelprüfung unterworfen und dadurch authentifiziert. Das Ergebnis der Prüfung kann aus einem binären Freigabesignal "Go/Nogo" für die Nutzdatenworte bestehen.

Figur 2 zeigt schematisch, wie beim Empfänger die Authentifikation durchgeführt wird. Um zu verhindern, daß ein unbefugter Zugriff erfolgt, ist es erforderlich, daß ein Speicher SP, der die Datensätze enthält und der Authentifikator AU in einem sicheren Bereich beim Empfänger EM liegt. Weiterhin ist es günstig, wenn das Freigabesignal Go/Nogo eine unverzichtbare Systemfunktion freigibt bzw. sperrt, die dann ebenfalls im sicheren Bereich liegen sollte. Der sichere Bereich wird am besten mit Hilfe der Integration dieser Komponenten in einem einzigen Halbleiterbaustein integriert. Möglich sind jedoch auch Maßnahmen zur Abkapselung auf Systemebene, z.B. durch Vergießen oder Ummanteln der kritischen Teile.

Durch das Freigabesignal wird im Prinzip ein Betriebszustand des Rechners gesteuert:
Bei Freigabe nach erfolgreicher Siegelprüfung sind alle Systemfunktionen des Rechners erlaubt. Jede Veränderung der freigegebenen Daten führt jedoch in den Betriebszustand gesperrt.

Bei dem Freigabesignal NoGo ist die Korrektheit des Siegels nicht mehr gewährleistet. Mindestens eine unverzichtbare Systemfunktion muß jetzt gesperrt sein, z.B. durch Blockierung der Befehlsausführung, durch Sperrung eines zentralen Datenwegs oder durch Sperren des Zugriffs zum Speicher.

Zur Siegelprüfung sind eine Reihe von Verfahren bekannt, bei denen der verwendete Siegelprüf-Algorithmus dem Empfänger bekanntgemacht werden darf, ohne daß dieser dadurch in der Lage wäre, auf den Versiegelungsalgorithmus zu schließen. Diese Eigenschaft ist vor allem bei Software basierten Authentifikationsverfahren bedeutsam. Bekannte Verfahren ergeben sich z.B. aus W.Fumy/H.P.Rieß, Kryptographie, Oldenbourgverlag München, Wien 1988, Seite 263 bis 265 oder D.W.Davis, W.L. Price, Security for Computer Networks, John Wiley & Sons, Mai 1987, Seiten 119 bis 144.

Es ist auch möglich, den Siegelprüfalgorithmus vor dem Empfänger der Datensätze zu verbergen, z.B. dadurch, daß der Siegelprüfalgorithmus in einem sicheren Bereich der Hardware liegt. Dann ist aber sicherzustellen, daß auch aus dem Schnittstellenverhalten des dazu verwendeten Authentifikators der darin implementierte Siegelprüfalgorithmus nicht erschlossen werden kann. Um Angriffe praktisch unmöglich zu machen, ist es zweckmäßig, auf folgende Punkte besonderen Wert zu legen:

- Um die innere Struktur des Authentifikators nicht zu erraten, ist ein großes Reservoir an geeigneten Siegelprüfalgorithmen verfügbar,

- der sichere Bereich erzeugt so wenig Output wie möglich, dadurch werden die Gesetzmäßigkeiten des Siegelprüfalgorithmus verschleiert.

Mit Hilfe des Authentifikators gemäß Figur 3 können diese Ziele erreicht werden. Der Authentifikator AU weist einen Expander-Schaltkreis EX, ein Schieberegister SR, eine Vergleichsschaltung VGL und einen Speicher für eine Sollsignatur SS auf. Die Vergleichsschaltung VGL erzeugt das Freigabesignal Go/NoGo.

Der Authentifikator überprüft die Datensätze DS auf Unversehrtheit des dort enthaltenen Siegels. Dabei wird von wortorganisierten Daten ausgegangen. Der Authentifikator liest den Datensatz also wortweise ein, dabei verknüpft er die neu hinzukommenden Nutz-Datenworte oder Siegelworte mit einem bis dahin gebildeten Zwischenergebnis. Das Siegelprüfkriterium kann darin bestehen, daß die bei Kompaktierung des gesamten Datensatzes resultierende Istsignatur mit einem fest vorgegebenen Wert der Sollsignatur übereinstimmen muß.

Die ml Bit breiten Worte des Datensatzes werden im Expanderschaltkreis EX einer allgemeinen, kombinatorischen Transformation unterworfen. Die resultierenden Zwischenvariablen sind m bit breit und werden im unmittelbar daran anschließenden parallelen rückgekoppelten Schieberegister (LFSR) kompaktiert. Wenn der gesamte Datensatz kompaktiert ist, wird die resultierende Istsignatur im Vergleicherschaltkreis VGL mit einer vorgegebenen Sollsignatur SS verglichen. Das Ergebnis dieses Vergleichs ist das Freigabesignal, das auch das einzigste Ausgabesignal des Authentifikators AU ist.

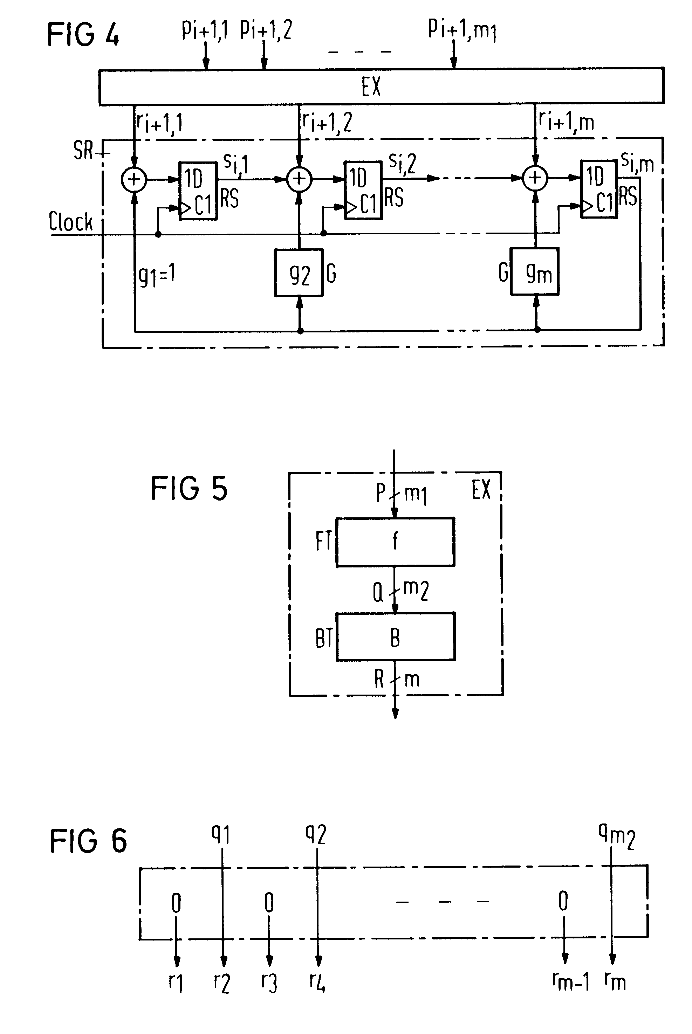

Hauptfunktion des Expanderschalterkreises ist die Vergrößerung der Wortbreite, dazu kann die Anordnung der Bits in den Datenworten permutiert werden, einzelne Bits mehrfach eingeschleust oder mit Konstanten auf eine größere Wortbreite aufgefüllt werden. Ein Beispiel für die zuletzt genannte Vorgehensweise zeigt Figur 6. Dort werden jeweils zwischen die Datenbits q Konstanten "0" eingefügt und damit eine Verbreiterung der Worte erreicht.

Die Verfahrensgüte der Versiegelung hängt nämlich maßgeblich von der Breite m des Schieberegisters SR ab. Um potentielle Angriffe auf den Authentifikator sicher zu verhindern, kann der Expanderschaltkreis auch zur zusätzlichen Verschleierung des Versiegelugnsalgorithmus eingesetzt werden und dazu neben der Expansion beliebige kombinatorische Funktionen ausführen.

Das parallel linear rückgekoppelte Schieberegister SR komprimiert die sukzessiven eingegebenen Worte zu einem einzigen Wort, der Istsignatur. Diese Komprimierung wird z.B. bei Hardwaretestverfahren verwendet und ist dort bekannt (vgl. auch Fumy/Rieß Seite 117). Anstatt eines LFSR könnten auch andere Mechanismen zur Signaturbildung eingesetzt werden, z.B. parallele nichtlinear rückgekoppelte Schieberegister oder auch Blockchiffren in einem Rückkopplungsmodus. Der Vorteil der LFSR und NFSR besteht jedoch darin, daß dies erheblich einfacher in Hardware zu realisieren ist. Das nichtlineare Schieberegister bietet gegenüber dem linearen ein höheres Verschleierungspotential, jedoch ist es theoretisch schwieriger zu erfassen. Zum Beispiel ist es einfacher, bei einem linearen Schieberegister einen effektiven Versiegelungsalgorithmus zu entwickeln.

Figur 4 zeigt ein linear rückgekoppeltes Schieberegister, das zur Bildung der Istsignatur verwendet werden kann. Das Schieberegister SR ist an den Ausgang des Expanderschaltkreises EX angeschlossen, dem die Datensätze wortweise mit der Breite ml zugeführt werden. Die Datenbits sind mit p bezeichnet. Der Ausgang des Expanderschaltkreises und der Eingang des Schieberegisters SR hat dagegen die Länge m und wird mit r bezeichnet. Die zum Zeitpunkt i gespeicherten Inhalte der Registerzellen RS des Schieberegisters SR sind mit s bezeichnet. Diese Bezeichnungen ergeben sich auch aus Figur 4.

Das Schieberegister SR besteht in bekannter Weise aus Registerstufen RS, weist parallele Eingänge R auf, wobei der Ausgang des Schieberegisters über Torschaltungen G mit den Eingängen der Registerstufen verbindbar ist. Durch Öffnen der Torschaltungen G ist es möglich, beliebige Rückkopplungen vom Ausgang des Schieberegisters zu den Eingängen der Registerstufen einzustellen. Der Rückkopplungszweig an die erste Stelle ist immer vorhanden, d.h. G1 ist immer durchlässig. Das Signaturregister nach Figur 4 kann anstatt der hier verwendeten modularen Form genauso in der Standardform realisiert werden, die ebenfalls allgemein bekannt ist. Die Rückkopplung erfolgt mit Hilfe von Rückkopplungspolynomen, die in der Literatur bekannt sind.

Der Aufbau eines Expanders EX kann Figur 5 entnommen werden. Dieser besteht aus zwei Teilen FT,BT. Mit Hilfe des ersten Teils FT können die Eingangssignale P einer nichtlinearen Transformation f zum Ausgangssignal Q unterzogen werden, im zweiten Teil des Expanderschaltkreises können die Eingangssignale Q einer linearen Transformation B unterzogen werden und dabei Ausgangssignale R erzeugt werden. Bei diesen Transformationen wird ebenfalls die Breite der Datenworte verändert. Die nichtlineare Funktion f dient ausschließlich zur Verschleierung des vom Authentifikator ausgeführten Siegelprüfalgorithmus. Die Vielzahl möglicher kombinatorischer Funktionen mit ml bit breitem Eingang und m2 bit breitem Ausgang vervielfacht nämlich die Möglichkeiten zur Auswahl eines Versiegelungsverfahrens und erschwert dadurch Angriffe auf den installierten Integritätsschutz.

Mit Hilfe der linearen Transformation B soll dagegen die Vergrößerung der Datenwortbreite erreicht werden. An die Transformation B werden außer der Linearität keine weiteren Bedingungen gestellt. B kann z.B. aus einem einfachen Aufspreizen der $m2$ signifikanten Eingangsbits auf $m$ Ausgangsbits durch Aufdoppelung oder Auffüllen mit Konstanten bestehen, möglich ist jedoch auch eine Kombination dieser Maßnahmen mit einer Permutation oder auch allgemeinere lineare Funktionen.

Wenn eine Sollsignatur vorgegeben ist, kann aus der linearen Transformation B und nichtlinearen Transformation f das Siegel, das den Datensätzen beizugeben ist, in der Regel ermittelt werden. Wenn somit nur dem Absender der Datensätze bekannt ist, welche Transformationen im Authentifikator durchgeführt werden, und wenn ihm weiterhin bekannt ist, wie die Sollsignatur aussieht, kann er den erforderlichen Siegelungsalgorithmus ausrechnen.

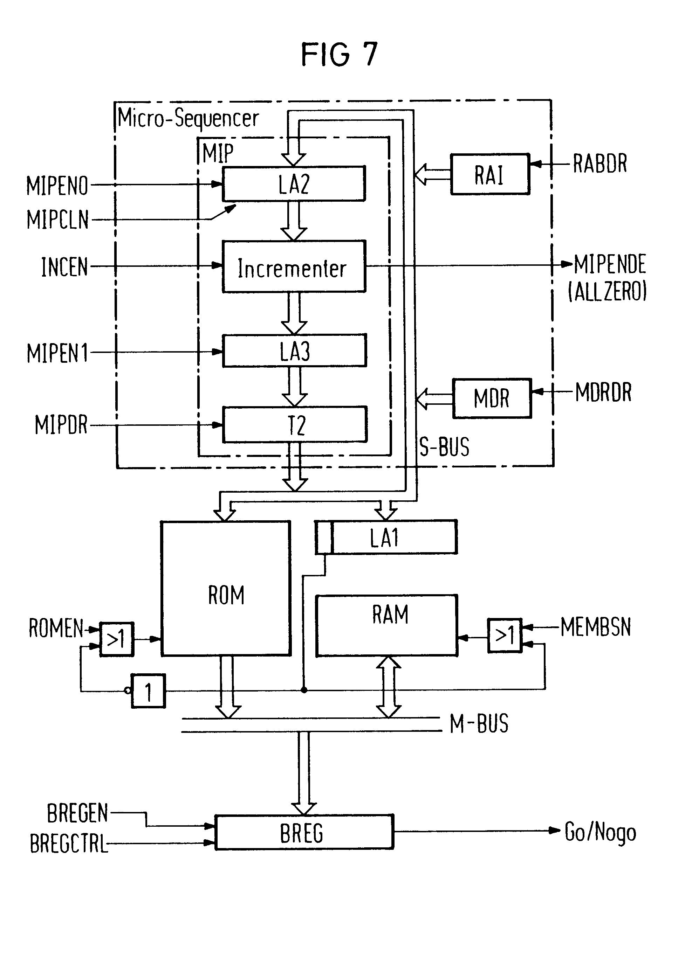

Dies wird anhand eines Beispieles der Figur 7, indem eine Mikroprozessor-Steuerung dargestellt ist, im Falle der Authentifizierung eines Mikroprogramms erläutert. Die Mikroprozessorsteuerung der Figur 7 ist vom bekannten Aufbau und braucht in seiner Funktion nicht weiter erläutert zu werden. Ein Mikrobefehlszähler MIP adressiert mit einem Tristate-Treiber TR über einen S-Bus, das in einem RAM (z.B. 512 Worte) und einem ROM (ebenfalls 512 Worte) abgespeicherte Mikroprogramm. Zur Anpassung des Timings wird die Adresse für das RAM zusätzlich in einem Latch LA1 gepuffert. Das 10. Bit der Mikrobefehlsadresse entscheidet z.B. darüber, ob das RAM oder das ROM angesprochen ist.

Das Befehlswort ist z.B. 32 bit breit und gelangt nach dem Auslesen über den M-Bus in das Befehlsregister BREG. Für ein Eingangslatch LA2 im MIP existieren drei Datenquellen:

- Ein Ausgangslatch LA3 des MIP, das bei rein sequentieller Abarbeitung die aktuelle Adresse für den S-Bus wieder einlatched und inkrementiert;
- ein Rücksprungadresseninterface RAI, das bei beendetem Unterprogramm die Rücksprungadresse über den S-Bus einspeichert; ein Datenregister MDR, das bei einem Sprungbefehl die Sprungzieladresse über den S-Bus eingibt.

Das Befehlsregister BREG kann nun zur Signaturbildung herangezogen werden. Dazu adressiert der MIP durch fortgesetztes Inkrementieren jedes Wort des ROMs und des RAMs einmal, wobei z.B. zuerst das ROM, dann das RAM angesprochen wird. Die dabei ausgelesenen Befehlsworte werden durch Signaturbildung im Befehlsregister BREG kompaktiert. Die Sollsignatur ist vorgegeben und an den Ausgängen des Signaturregi sters fest verdrahtet. Das Vergleichsergebnnis Go/NoGo wird z.B. einem Statusregister des Prozessors zugeführt.

Die Authentifizierung, also die Überprüfung des im ROM und RAM abgespeicherten Mikroprogramms erfolgt dann auf folgende Weise:

Jeder gültige Inhalt des Mikroprogramms muß im Gutfall zur gleichen Sollsignatur führen. Für das Mikroprogramm ROM ist dies ohne Probleme, da der Inhalt und damit auch die Zwischensignatur am Ende der ROM-Authentifizierung bei Beginn der Chip-Fertigung bekannt ist. Die Authentifizierung bedeutet für das ROM also nur eine Überprüfung der Funktion, die durch Spätausfälle oder ähnliche Umstände fehlerhaft sein kann.

Der Inhalt im Mikroprogramm RAM ist dagegen Benutzer spezifisch. Die sich daraus ergebende Signatur ist also ohne weitere Maßnahmen immer unterschiedlich und wird beim Vergleich mit der fest verdrahteten Sollsignatur zu einem NoGo-Signal. Durch Einfügen eines redundanten Wortes, das kein echtes Befehlswort darstellt und im Normalbetrieb nie adressiert wird, läßt sich ein beliebiger RAM-Inhalt immer zu einer vorgegebenen Sollsignatur ergänzen. Dieses redundante Wort ist dann das Siegel, das an jeder Stelle des RAMS stehen kann, z.B. auch am Ende des Mikroprogramms, da es sich dort einfacher berechnen läßt.

Beim Entwurf des Mikroprozessorchips vor der Fertigung wird von einer authorisierten Person eine beliebige Sollsignatur gewählt und diese fest verdrahtet. Bei einer Datenwortbreite von z.B. 32 Bit ergeben sich dann $2^{32}$ Möglichkeiten. Das Siegel wird für jeden beliebigen RAM Inhalt so berechnet, daß es im Gutfall die Zwischensignatur nach dem 511.ten RAM-Wort zu der gewählten Endsignatur ergänzt. Das Verfahren zur Berechnung des Siegels, die gewählte Rückkopplung des Signaturregisters BREG und vor allem die Sollsignatur wird selbstverständlich unter Verschluß gehalten und darf nur dem authorisierten Personenkreis zugänglich sein.

Die Berechnung des Siegels kann von einem Programmodul eines Mikroprogramm-Assemblers automatisch durchgeführt werden. Dieses Modul bildet zu jedem erzeugten Mikroprogrammwort, das später im ROM oder im RAM stehen wird, die Signaturbildung softwaremäßig nach. Aus der ermittelten Zwischensignatur nach dem vorletzten Wort, der Rückkopplung im Signaturregister und der gewählten Sollsignatur läßt sich das Siegel einfach und eindeutig berechnen. Wenn das Befehlswort 32 bit breit ist, dann kann ein Rückkopplungspolynom für das Schieberegister SR der Figur 4 folgendermaßen lauten:

$$1 + x + x^2 + x^{22} + x^{32}$$

Dementsprechend sind die Torschaltungen der Figur 4 auf folgende Weise eingestellt:

$$g_1 = 1, g_2 = 1, g_3 = 1,$$
$$g_4 = g_5 = ... = g_{22} = 0,$$

$g_{23} = 1$,

$g_{24} = g_{25} ... = g_{32} = 0$

Wenn z.B. die Sollsignatur "All Zero" gewählt wird, muß Bit 1 des Siegels <c dem Bit 32 der aktuellen Zwischensignatur SIG gleich sein:

SC (1): = SIG (32).

Die Bits 2 bis 32 des Siegels müssen gleich der EXOR-Verknüpfung des jeweils niederwertigen Bits 1 bis 31 der Zwischensignatur SIG mit dem rückgekoppelten und über die entsprechende Torschaltung zugeführten Bit 32 der Zwischensignatur SIG sein:

$2 \leq i \leq 32$: $SG(i) = (SIG(i-1) + g_i.SIG(32))$ mod2

Bei allgemeiner Sollsignatur SS gilt folgendes: Bei vorgegebener Sollsignatur SS muß Bit 1 des Siegels SG der EXOR-Verknüpfung von Bit 1 der Sollsignatur SS mit Bit 32 der aktuellen Zwischensignatur SIG gleich sein: $SG(1) = (SS(1) + SIG(32))$ mod2.

Die Bits 2 des 32 des Siegels müssen gleich der EXOR-Verknüpfung der jeweils gleichwertigen Bits der Sollsignatur SS mit den jeweils niederwertigen Bits 1 bis 31 der Zwischensignatur SIG und mit dem rückgekoppelten und über die entsprechende Torschaltung zugeführten Bit 32 der Zwischensignatur SIG sein:

$2 \leq i \leq 32$: $SG(i) = (SS(i) + SIG(i-1) + g_iSIG(32))$mod2.

Für jede andere Sollsignatur müssen die beiden Gleichungen also entsprechend modifiziert werden. Entsprechendes gilt auch dann, wenn das Siegel nicht an letzter Stelle des RAM steht, sondern an beliebiger Stelle.

Beim Ausführungsbeispiel der Figur 7 besteht somit ein Datensatz aus einem Mikroprogramm, das in einem RAM-Speicher abgespeichert wird. Bei dem Ausführungsbeispiel ist zur Vereinfachung der Erläuterung kein Expanderschaltkreis vorgesehen. Die in Figur 7 gezeigten, aber nicht erläuterten Signale sind Steuersignale und Taktsignale.

**Patentansprüche**

1. Verfahren zur Verhinderung der Nutzung von unerlaubt veränderten Daten durch einen Empfänger,
   - bei dem der Absender Nutzdaten mit einem Siegel versieht,
   - bei dem aus den Nutzdaten und einem zugehörigen Siegel bestehende Datensätze dem Empfänger zur Verfügung gestellt werden,
   - bei dem die Datensätze vor Nutzung der Nutzdaten einem vom Empfänger nicht beeinflußbaren Authentifkator zugeführt werden,
   - bei dem der Authentifikator ein die Nutzung der Nutzdaten ermöglichendes Freigabesignal (Go/NoGo) dann erzeugt, wenn das Siegel (SG) korrekt ist.

2. Verfahren nach Anspruch 1, bei dem das Siegel (SG) zur Versiegelung der Nutzdaten aus den Nutzdaten gewonnen wird und bei dem im Authentifikator (AU) festgestellt wird, ob Nutzdaten und Siegel in einem Datensatz zusammenpassen.

3. Verfahren nach Anspruch 1 oder 2, bei dem der Authentifikator (AU) als Hardware-Baustein realisiert ist, der gegenüber einem äußeren Angriff sicher ist.

4. Verfahren nach einem der vorhergehenden Ansprüche, bei dem bei Nichtfreigabe (NoGo) mindestens eine zur Nutzung der Nutzdaten notwendige Systemfunktion gesperrt wird.

5. Schaltungsanordnung zur Siegelprüfung von Datensätzen, die aus mit einem Siegel aus mindestens einem Siegelwort versehenen Nutz-Datenworten bestehen,
   - bei der ein Expanderschaltkreis (Ex) vorgesehen ist, dem jeder zu prüfender Datensatz wortweise zugeführt wird und der die Breite der Worte im Datensatz durch eine Transformation erhöht,
   - bei der ein rückgekoppeltes Schieberegister (SR) vorgesehen ist, dem die transformierten Worte des Datensatzes zugeführt werden und der eine Istsignatur der Worte bildet,
   - bei der eine Vergleichsschaltung (VGL) vorgesehen ist, die die Istsignatur mit einer Sollsignatur vergleicht und bei positivem Vergleichsergebnis ein Freigabesignal (Go/NoGo) erzeugt.

6. Schaltungsanordnung nach Anspruch 5, bei der der Expanderschaltkreis (EX) die Datenbits der Worte einer linearen Transformation unterzieht.

7. Schaltungsanordnung nach Anspruch 5 oder 6, bei der der Expanderschaltkreis die Datenbits der Worte einer nichtlinearen Transformation unterzieht.

8. Schaltungsanordnung nach einem der Ansprüche 5 bis 7, bei dem der Expanderschaltkreis die Wortbreite durch Aufdoppeln der Datenbits der Worte erhöht.

9. Schaltungsanordnung nach einem der Ansprüche 5 bis 7, bei der der Expanderschaltkreis (EX) die Wortbreite durch Auffüllen mit Konstanten zwischen den Datenbits der Worte erhöht.

10. Schaltungsanordnung nach einem der Ansprüche 5 bis 9, bei der das Schieberegister (SR) ein linear rückgekoppeltes Schieberegister ist.

11. Schaltungsanordnung nach Anspruch 10, bei der eine Rückkopplung des Ausgangs des Schieberegisters (SR) über steuerbare Torglieder (G) zu den Eingängen aller Registerstufen (RS) des Schieberegisters erfolgt.

12. Schaltungsanordnung nach einem der Ansprüche 5 bis 11, bei der der Expander-Schaltkreis (EX), das Schieberegister (SR) der Sollsignaturspeicher (SS) und die Vergleichsschal tung (VGL) in einem gegen äußere Angriffe sicheren Baustein enthalten ist, dem von außen die Datensätze (DS) zugeführt werden und der nur das Freigabesignal abgibt.

13. Schaltungsanordnung nach einem der Ansprüche 5 bis 12, bei der das Siegel für die Datenworte eines Datensatzes aus der Sollsignatur und der Istsignatur dieses Datensatzes ermittelt wird.

14. Schaltungsanordnung nach Anspruch 13, bei der zur Prüfung eines Mikroprogramms bei einem Mikroprozessor die Signatur der Mikrobefehlsworte und des Siegels gebildet wird und diese Istsignatur mit einer vorgegebenen Sollsignatur verglichen wird.

15. Schaltungsanordnung nach Anspruch 14, bei der das Siegel ermittelt wird aus dem Unterschied der Sollsignatur und einer Zwischensignatur, die aus den Mikrobefehlsworten gebildet ist.

FIG 1

FIG 2

FIG 3

FIG 4

$p_{i+1,1}$  $p_{i+1,2}$  — — —  $p_{i+1,m_1}$

EX

$r_{i+1,1}$  $r_{i+1,2}$  $r_{i+1,m}$

SR

$s_{i,1}$  1D  $s_{i,2}$  1D  $s_{i,m}$  1D
C1 RS  C1 RS  C1 RS

Clock

$g_1=1$  $g_2$ G  G $g_m$

FIG 5

P ∤ $m_1$  EX

FT  f

Q ∤ $m_2$

BT  B

R ∤ m

FIG 6

$q_1$  $q_2$  $q_{m_2}$

0  0  — — —  0

$r_1$  $r_2$  $r_3$  $r_4$  $r_{m-1}$  $r_m$

# FIG 7